Europäisches Patentamt

European Patent Office

Office européen des brevets

(11) Publication number: **0 198 330**
**B1**

## EUROPEAN PATENT SPECIFICATION

(45) Date of publication of patent specification: **12.07.89**

(51) Int. Cl.⁴: **A 47 J 27/16**

(21) Application number: **86104502.9**

(22) Date of filing: **02.04.86**

(54) Steam cooking oven, particularly for community kitchens.

(30) Priority: **02.04.85 IT 3402785 u**

(43) Date of publication of application:
**22.10.86 Bulletin 86/43**

(45) Publication of the grant of the patent:
**12.07.89 Bulletin 89/28**

(84) Designated Contracting States:
**AT BE CH DE FR GB IT LI LU NL SE**

(56) References cited:
**AT-B- 190 236**
**DE-A-3 021 418**
**DE-B-2 229 991**
**GB-A- 660**
**US-A- 503 787**
**US-A-3 374 781**
**US-A-3 391 271**

(73) Proprietor: **ZANUSSI GRANDI IMPIANTI S.p.A.**
**Viale Treviso 15**
**I-33170 Pordenone (IT)** .

(72) Inventor: **Rizzo, Adriano**
**Via Celle 4/b**
**I-31020 Santa Maria di Lago (Treviso) (IT)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

EP 0 198 330 B1

## Description

The present invention relates to a steam cooking oven, particularly for community kitchens (e.g. in schools, hospitals, mensae and the like) as set forth in the preamble of claim 1. Such steam cooking oven is known from US-A-3 391 271.

This document discloses an electrical food cooker comprising a chamber wherein water is taken to boiling temperature. Outside said chamber the food cooker comprises a base plate extension onto which a food container is placed which is connected to said chamber by means of a syphon arrangement. Said syphon arrangement comprises a rising tube which is rotatable by means of a handle in a horizontally extending axis so that the end of said rising tube may be immersed in water which is comprised in said chamber, the top of which is hermetically sealed.

The water in the chamber is taken to boiling temperature by means of electrical heating means whereupon the boiling water is forced by steam generated in said chamber through said rising tube and said syphon arrangement into the food container. The syphon arrangement terminates within said food container adjacent the bottom thereof. Thus, upon termination of the cooking cycle and after the temperature in said chamber drops sufficiently, a vacuum is created in said chamber causing the water within the food container to be drawn back into the chamber thereby automatically draining the food. By means of the afore-mentioned handle, the rising tube may be moved above the water level so that only steam is forced through it and through said syphon arrangement. In such position the cooker may be conveniently used for cooking foods solely by steaming. The duration of such a steaming operation is controlled by the amount of water originally placed into said chamber.

This type of cooker needs respective safety means associated to the water chamber in order that undue pressure created therein upon boiling of the water may not create any risk of an explosion of the cooker when the rising tube or the syphon arrangment is accidently clogged by any foreign matter. Said foreign matter may enter therein due to the suction effect created at a preceding cooking cycle.

Additionally, the structure is rather complicated requiring two separate covers for the water chamber and the food container. From US-A-3 992 984, US-A-3 823 657, US-A-3 818 819 and US-A-3 733 998 steam cooking ovens are known composed of a closed pressure chamber for the insertion thereinto of containers containing the foods to be cooked, and a steam generator external of the cooking chamber and connected thereto by means of conduits provided with valve means for controlling the passage of steam therethrough.

The disadvantages of these type of ovens derive from the fact that the steam generator and the cooking chamber are two completely separate units. This necessitates the employ of suitable connections between the two units themselves and between them and the required supply and discharge networks (water and electric current). In any case, the installation of these ovens is rather complicated, cumbersome and unsatisfactory from the functional point of view.

It is the object of the invention to provide a compact steam cooking oven incorporating the steam generator while avoiding any reduction of the capacity of the cooking chamber as well as any impediment of access thereto and visibility of its interior. The oven should reliably produce "dry" steam for the cooking of foods and should be capable of simple and rapid installation while offering the possibility of being reliably cleaned and readily maintenanced.

This object is attained by the characterizing features of claim 1. Preferred embodiments of the invention are the subject matter of the dependent claims.

The characteristics of the invention will become more clearly evident from the following description, given by way of example with reference to the accompanying drawings, wherein:

Fig. 1, shows a diagrammatical sectional view of an oven according to an embodiment of the invention,

figures 2 to 4 show diagrammatical part sectional views of modifications of the oven shown in fig. 1, and

fig. 5 shows an enlarged detail of fig. 4.

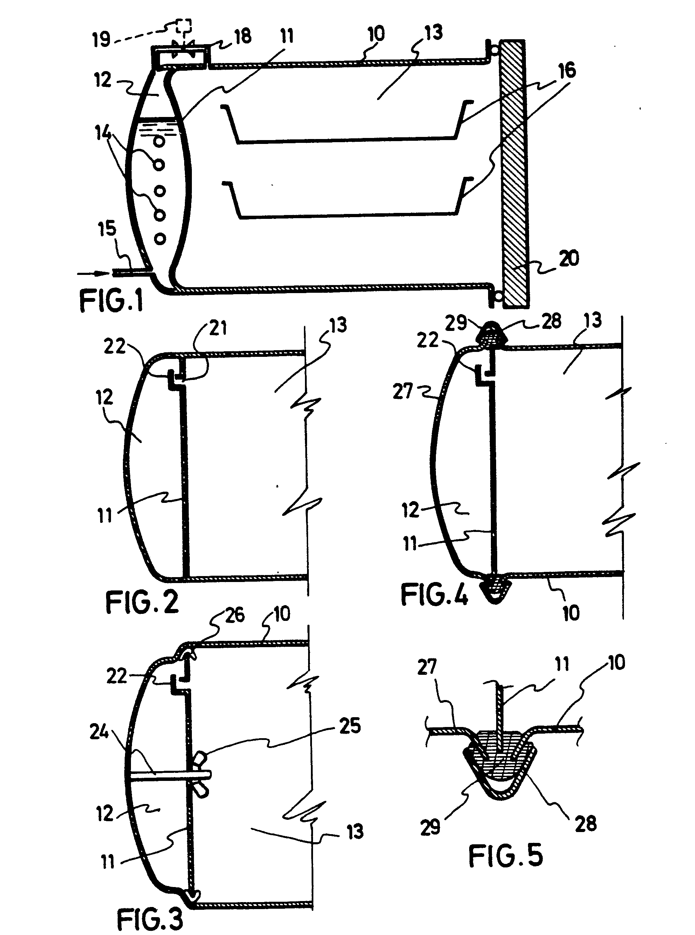

In a first embodiment shown in fig. 1, the steam cooking oven according to the invention comprises a housing 10 formed by a single body shell the interior of which is separated by a substantially vertical partition 11 into two compartments 12 and 13 completely separate from one another. Compartment 12 constitutes a steam generator and contains a series of electric resistance heaters 14 for heating and converting into steam water supplied via a feed passage 15. Compartment 13 represents the cooking chamber adapted to be charged with the foods to be cooked, the foods being contained in containers 16 supported on (not shown) guides provided on the lateral walls of chamber 13.

A conduit 18, optionally provided with a control valve 19, permits the passage of steam from generator 12 into cooking chamber 13, the latter being pressure-sealed by a door 20.

The oven is additionally provided with conventional control means, which are generally known and therefore not described, such a water level indicators, manometers, safety steam valves and the like.

On the base of the same principles a set forth above, the invention may be practiced in a second embodiment shown in fig. 2, in which the oven is even more simple and compact. In this embodiment, the internal partition 11 between steam generator 12 and cooking chamber 13 is provided with an opening 21 formed in its top portion. This eliminates the necessity of an exterior connection between the steam generator 12 and the cooking chamber 13.

For ensuring that the steam entering cooking chamber 13 is in a "dry" state so as to accomplish correct and improved cooking of the foods, partition 11 is formed with a labyrinth profile 22 adjacent opening 21 at its side facing towards steam generator 12.

As the steam is constrained to pass through labyrinth 22, its velocity decreases, as a result of which any droplets of water entrained by the steam are separated therefrom and collected in the labyrinth, whence they return to generator 12 through lateral channels (not shown).

The construction of the oven according to the invention may be further improved as shown in fig. 3 by mounting partition 11 in the interior of the oven in a releasable manner.

Partition 11 may for example be secured to a supporting stud 24 by means of a threaded fastener 25.

In this case the outer rim of partition is provided with a peripheral sealing gasket 26 interposed between said rim and the walls of housing 10.

This solution appears particularly advantageous, permitting as it provides free access to the interior of the steam generator for thorough cleaning and complete maintenance.

Finally included within the scope of the invention is a further embodiment shown in figs. 4 and 5, in which the rear wall 27 of the oven and the interior partition 11 are secured to housing 10 by means of an external clamp ring 28 provided with threaded securing means (not shown) with the interposition of a sealing gasket 29.

## Claims

1. A steam cooking oven particularly for community kitchens comprising a cooking chamber (13) for containing foods to be cooked and a steam generator (12) associated to said cooking chamber (13) and provided with electrical heating means (14), connection means (18, 21, 22) being provided for the passage of the steam from said steam generator (12) to said cooking chamber (13), characterized in that the oven is formed by a single body shell (10) defining a hollow space closed by a single door (20) and divided by an internal partition (11) which defines said cooking chamber (13) and said steam generator (12), said partition (11) being associated to said steam passsage means (18, 21, 22).

2. A steam cooking oven according to claim 1, characterized in that said internal partition (11) is provided with peripheral sealing means (26) and is mounted on a fixed support (24) with the aid of releasable means (25).

3. A steam cooking oven according to claim 1, characterized in that said body shell (10) comprises an end wall (27) defining said steam generator (12) connected to the open rear end of said cooking chamber (13) and separated therefrom by said partition (11) provided with peripheral sealing means (29), said end wall (27) being secured to said cooking chamber (13) by means of releasable external securing means (28).

4. A steam cooking oven according to any one of the preceding claims, characterized in that an upper portion of said internal partition (11) is provided with an opening (21) for the passage therethrough of steam towards said cooking chamber (13), said partition (11) being formed adjacent said opening (12) with a labyrinth profile (22).

## Patentansprüche

1. Dampfkochvorrichtung, insbesondere für Gemeinschaftsküchen, enthaltend eine Kochkammer (13) zur Aufnahme von zu kochenden Lebensmitteln und einen Dampfgenerator (12), der der Kochkammer (13) zugeordnet ist und der mit elektrischen Heizeinrichtungen (14) versehen ist, wobei Verbindungseinrichtungen (18, 21, 22) für den Durchlaß des Dampfes vom Dampfgenerator (12) zur Kochkammer (13) vorgesehen sind, dadurch gekennzeichnet, daß die Kochvorrichtung von einer einzigen Gehäuseschale (10) gebildet ist, die einen Hohlraum umschließt, der von einer einzigen Tür (20) verschlossen und durch eine innere Trennwand (11) geteilt ist, die die Kochkammer (13) und den Dampfgenerator (12) begrenzt, welche Trennwand (11) den Dampfdurchlaßeinrichtungen (18, 21, 22) zugeordnet ist.

2. Dampfkochvorrichtung nach Anspruch 1, dadurch gekennzeichnet, daß die innere Trennwand (11) mit Umfangsdichtungseinrichtungen (26) versehen und an einem festen Träger (24) mit Hilfe lösbarer Einrichtungen (25) befestigt ist.

3. Dampfkochvorrichtung nach Anspruch 1, dadurch gekennzeichnet, daß die Gehäuseschale (10) eine Stirnwand (27) aufweist, die den Dampfgenerator (12) begrenzt, der mit dem offenen hinteren Ende der Kochkammer (13) verbunden und davon durch die Trennwand (11) getrennt ist, die mit Umfangsdichtungseinrichtungen (29) versehen ist, wobei die Stirnwand (27) an der Kochkammer (13) mittels einer lösbaren äußeren Befestigungseinrichtung (28) befestigt ist.

4. Dampfkochvorrichtung nach einem der vorhergehenden Ansprüche, dadurch gekennzeichnet, daß ein oberer Abschnitt der inneren Trennwand (11) mit einer Öffnung (21) für den Durchgang von Dampf in Richtung auf die Kochkammer (13) versehen ist, welche Trennwand (11) benachbart der Öffnung (12) mit einem Labyrinthprofil (22) versehen ist.

## Revendications

1. Four de cuisson à la vapeur, notamment pour des cuisines collectives, comprenant une chambre de cuisson (13) pour contenir des aliments à cuire et un générateur de vapeur (12) associé à cette chambre de cuisson (13) et équipé de moyens de chauffage électriques (14), des éléments de raccordement (18, 21, 22) étant prévus pour le passage de la vapeur du générateur de vapeur (12) à la chambre de cuisson (13), caractérisé en ce que le four est formé par une coque unique (10) définissant un espace creux fermé par une seule porte (20) et divisé par une cloison intérieure (11) qui délimite la chambre de cuisson (13) et le générateur de vapeur (12), cette cloison (11) étant associée aux moyens de passage de la vapeur (18, 21, 22).

2. Four de cuisson à la vapeur selon la revendication 1, caractérisé en ce que cette cloison interne (11) comporte des moyens d'étanchéité périphériques (26) et est montée sur un support fixe (24) à l'aide de moyens amovibles (25).

3. Four de cuisson à la vapeur selon la revendication 1, caractérisé en ce que la coque (10) comporte une paroi terminale (27) délimitant le générateur de vapeur (12), raccordé à l'extrémité arrière ouverte de la chambre de cuisson (13) et séparé de celle-ci par la cloison (11) comportant des moyens d'étanchéité périphériques (29), cette paroi terminale (27) étant fixée à la chambre de cuisson (13) par des moyens de fixation extérieurs amovibles (28).

4. Four de cuisson selon l'une quelconque des revendications précédentes, caractérisé en ce qu'une portion supérieure de la cloison interne (11) comporte une ouverture (21) pour le passage de la vapeur en direction de la chambre de cuisson (13), cette cloison (11) étant formée adjacente à l'ouverture (12) avec un profil de labyrinthe (22).

FIG.1

FIG.2

FIG.3

FIG.4

FIG.5